# EUROPEAN PATENT APPLICATION

(11) **EP 2 161 493 A1**
(43) Date of publication of application: **10.03.2010**
(21) Application number: 08738761.9
(22) Date of filing: 24.03.2008
(51) Int. Cl.: F21S 2/00, F21V 7/00, F21V 7/22, G02F 1/13357, F21Y 103/00

(54) **LIGHTING APPARATUS, DISPLAY UNIT, AND TELEVISION RECEIVER**

(30) Priority: 04.07.2007 JP 2007176332
(71) Applicant: Sharp Kabushiki Kaisha, Osaka-shi, Osaka 545-8522 (JP)
(72) Inventor: KUROMIZU, Yasumori, Osaka 545-8522 (JP); YOKOTA, Masashi, Osaka 545-8522 (JP); SHIMIZU, Masaki, Osaka 545-8522 (JP)
(74) Representative: Müller - Hoffmann & Partner
(86) International application number: PCT/JP2008/055422
(87) International publication number: WO 2009/004841

(57) **Abstract**

The present invention includes a plurality of tubular light sources 17 arranged parallel to one another, and a light reflecting member 40 arranged on the side of the tubular light sources 17 that corresponds to the opposite side of the light emitting side. The tubular light sources 17 are arranged so that a narrow-interval area 17A where the arrangement interval thereof is relatively narrow and a wide-interval area 17B where the arrangement interval is relatively wide are provided. The light reflecting member 40 includes an opening section 50 located directly below the tubular light sources 17. The opening section 50 is provided so that the opening ratio as a ratio between a total area of the light reflecting member 40 and areas of the opening section 50 is higher at an area of the light reflecting member 40 corresponding to the narrow-interval area 17A than at an area of the light reflecting member 40 corresponding to the wide-interval area 17B.

## Description

### TECHNICAL FIELD

The present invention relates to a lighting device, a display device and a television receiver.

### BACKGROUND ART

In a display device having non-luminous optical elements as typified by a liquid crystal display device, a backlight device is provided on the backside of a display panel such as a liquid crystal panel, so as to illuminate the display panel (as shown in Patent Document 1, for example).

In order to prevent reduction in luminescent efficiency of light sources attributable to their own heat, Patent Document 1 discloses a technique that provides at least one opening section on a reflective member arranged across a plurality of light sources from a liquid crystal display element, so that the opening section is located to correspond to the orthogonal projection of a light source onto the reflective member, which can be obtained by projecting the light source along a direction perpendicular to the display surface of the liquid crystal display element.

Following recent needs for the growing size and power-saving feature of a liquid crystal display device, problems have been generated in connection with light sources of the liquid crystal display device. Some of them are cited as major problems, which includes problems related to the uneven distribution of brightness, such as unevenness of brightness or visible images of lamps, as well as the problems related to the above-described luminescent efficiency.

In order to obtain homogeneous light sources overcoming the uneven distribution of brightness, for example, Patent Document 2 discloses a technique that provides a number of transmittance regulators having a size equal to or smaller than 500 micrometers, which are arranged on an optical member and in a predetermined pattern of density distribution.

Further, Patent Document 3 discloses a technique that provides a plurality of straight tube lamps arranged substantially parallel and along the horizontal or longitudinal direction of the display screen of a display panel. The intervals between the straight tube lamps are set to be narrower at the central area of the display screen of the display panel and to increase at a constant rate and towards the upper or lower end of the display screen (which is also referred to as an unequal lamp-pitch structure). In general, people pay attention to the center of the screen, and therefore don't mind if the end of the screen has brightness slightly lower than that of the center of the screen. Focusing on this tendency, the technique allows for reduction in number of lamps and therefore in power consumption while maintaining the uniformity in brightness of the surface light source.
Patent Document 1: JP-A-2002-196326
Patent Document 2: JP-A-2007-17941
Patent Document 3: JP-B-3642723

### (Problem to be Solved by the Invention)

However, the existing measures are not adequate to prevent the uneven distribution of brightness, and accordingly, there is an urgent need to develop new technologies in accordance with the growing screen size of a liquid crystal display device. Particularly in the unequal lamp-pitch structure as in Patent Document 3, the brightness distribution on the entire screen is extremely sensitive to the arrangement of lamps. Therefore, the end of the screen may be prone to display unevenness, such as brightness unevenness due to shortage of the light amount attributable to the wide intervals between lamps, or visible images of lamps due to insufficient reflection of the light.

### DISCLOSURE OF THE INVENTION

The present invention was made in view of the foregoing circumstances, and an object thereof is to provide a lighting device having a simple construction capable of partially regulating the illumination brightness so as to provide a gentle distribution of illumination brightness. A further object of the present invention is to provide a display device having the lighting device, and to provide a television receiver having the display device.

### (Means for Solving the Problem)

In order to solve the above problem, a lighting device according to the present invention includes a plurality of tubular light sources arranged parallel to one another, and a light reflecting member arranged on the side of the tubular light sources that corresponds to the opposite side of the light emitting side. The tubular light sources are arranged so that a narrow-interval area where the arrangement interval thereof is relatively narrow and a wide-interval area where the arrangement interval is relatively wide are provided. The light reflecting member includes an opening section located directly below the tubular light sources. The opening section is provided so that the opening ratio, which is a ratio between a total area of the light reflecting member and an area where the opening sections are formed, at an area of the light reflecting member corresponding to the narrow interval area is higher than that at an area of the light reflecting member corresponding to the wide-interval area.

The lighting device, in which the tubular light sources are thus arranged so that the narrow-interval area where the arrangement interval is relatively narrow and the wide-interval area where the arrangement interval is relatively wide are provided, can have illumination brightness that is higher at the narrow-interval area side than at the wide-interval area side. Further, the provision of the wide-interval area can lead to reduction in number of tubular light sources due to the relatively wide interval, which contributes to cost reduction. In the case of some applications of the lighting device, it is preferable that an area with high illumination brightness is provided partly and separately from an area with low illumination brightness. For example, in the case of a display device that provides display by use of the present lighting device, a bright display may be required on the inner side (or central area) of the display screen while a brighter display is not required on the outer side (or peripheral area) of the display screen. In this case, it is preferable that the narrow-interval area is arranged on the inner side of the display device while the wide-interval area is arranged on the outer side of the display device.

However, when the tubular light sources are arranged at intervals of varying length as described above, it is significantly important that the narrow-interval area capable of providing relatively high illumination brightness and the wide-interval area capable of providing relatively low illumination brightness are arranged in a balanced manner. If the illumination brightness differs excessively between the narrow-interval area and the wide-interval area, the entire distribution of illumination brightness may be provided as an uneven distribution, resulting in brightness unevenness in a display device that uses the present lighting device, for example.

According to the present invention, the opening section located on the light reflecting member and at a position directly below the tubular light source is additionally provided in the above construction having tubular light sources arranged at intervals of varying length. At the time, the opening ratio as a ratio of the area of the opening section in the entire light reflecting member is set to be higher at an area corresponding to the narrow-interval area of the tubular light sources, than at an area corresponding to the wide-interval area of the tubular light sources.
Some of the lights from the tubular light sources are directly oriented to the light emitting side (e. g. , to the display panel side). However, the rest may be emitted in directions other than toward the light emitting side, and can be reflected by the light reflecting member to the light emitting side. Both lights collectively provide the illumination brightness.

In view of this, the provision of the opening section on the light reflecting member enables reduction in amount of light to be reflected by the light reflecting member, because the opening section cannot reflect lights from the tubular light sources. Consequently, the illumination brightness can be reduced. At the time, the reduction of illumination brightness can be set to be larger at the narrow-interval area of the array of the tubular light sources, as a result of setting the opening ratio, i.e., the ratio of the area of the opening section in the entire light reflecting sheet, to be higher at the area corresponding to the narrow-interval area than at the area corresponding to the wide-interval area. Thus, the difference in illumination brightness between the narrow-interval area and the wide-interval area can be reduced. That is, the adjustment of illumination brightness between the narrow-interval area and the wide-interval area of the array of the tubular light sources can be achieved by regulating the opening ratio in the light reflecting member. Consequently, the illumination brightness can be gently distributed over the entire lighting device, and thereby display unevenness such as the above-described brightness unevenness can be prevented or suppressed, for example, in a display device that uses the present lighting device.

Further, the opening section is located on the light reflecting member so as to be at a position directly below the tubular light source. In the case of a display device that includes the lighting device of the present invention, for example, the position directly below the tubular light source represents the position corresponding to the orthogonal projection of the tubular light source onto the light reflecting member, which can be obtained by projecting the tubular light source along a direction perpendicular to the display screen of the display device.
The opening section cannot reflect the light from the tubular light source as described above, and therefore the brightness at the opening section is relatively low in comparison with that at the ordinary portions surrounding the opening section (or areas not including the opening section). Thus, a significant difference in brightness may occur therebetween, and consequently the opening section may be visible to a viewer seeing an image on the display screen when the lighting device is used for a display device, for example.
In view of this, the opening section is located directly below the tubular light sources. According to the construction, the tubular light source can be provided between the opening section and the eyes of the viewer seeing the display screen, and thereby the opening section can be prevented from being visible.

Some aspects of the present invention provide variations of arrangement intervals of the tubular light sources. For example, the tubular light sources may be arranged so that the narrow interval area is positioned in the array direction of the plurality of tubular light sources so as to be on the inner side of the wide-interval area.
Further, the narrow-interval area of the tubular light sources may be positioned at a central area of the array of the tubular light sources, while the wide-interval area may be positioned at an end area of the array of the tubular light sources.
Various arrangements other than those described above are also possible. However, further aspects of the present invention will be hereinafter explained, pointing to the case where the narrow-interval area is positioned at a central area of the array of the tubular light sources while the wide-interval area is positioned at an end area of the array of the tubular light sources, as an example.

In the lighting device of the present invention, the above opening section can include a plurality of opening sections arranged along an axial direction of the tubular light sources, in which the interval between opening sections of the plurality of opening sections adjacently arranged along the axial direction and in the area corresponding to the narrow-interval area may be set to be smaller than the interval between opening sections of the plurality of opening sections adjacently arranged along the axial direction and in the area corresponding to the wide-interval area.
In this construction, regulation of the opening ratio in the light reflecting member is achieved by adjusting the intervals between opening sections. That is, due to the intervals between opening sections being set to be smaller at the area corresponding to the narrow-interval area of the tubular light sources than at the area corresponding to the wide-interval area, a larger number of opening sections can be provided in the area corresponding to the narrow-interval area. Thus, the opening ratio in the light reflecting member is set to be relatively high at the area corresponding to the narrow-interval area. Consequently, the amount of light to be reflected and therefore the illumination brightness can be reduced at the narrow-interval area, and thereby the illumination brightness can be gently distributed between the narrow-interval area and the wide-interval area of the tubular light sources.

The opening section may be formed to have a planer dimension that is larger at the area corresponding to the narrow-interval area than at the area corresponding to the wide-interval area.
In this construction, regulation of the opening ratio in the light reflecting member is achieved by adjusting the planar dimension (or size) of the opening section. That is, due to the planar dimension of the opening section being set to be larger at the area corresponding to the narrow-interval area than at the area corresponding to the wide-interval area, the opening ratio in the light reflecting member can be relatively high at the area corresponding to the narrow-interval area. Consequently, the amount of light to be reflected and therefore the illumination brightness can be reduced at the narrow-interval area, and thereby the illumination brightness can be gently distributed between the narrow-interval area and the wide-interval area of the tubular light sources.

The tubular light source can include a high voltage area to be subjected to relatively high voltage and a low voltage area to be subjected to relatively low voltage. The opening section may be provided so that the opening ratio as a ratio of the area of the opening section in the entire light reflecting member is higher at an area corresponding to the high voltage area, than at an area corresponding to the low voltage area.
In some cases, the brightness of the tubular light source may be higher at the high voltage area of the tubular light source, than at the low voltage area thereof. In view of this, the opening section is provided so that the opening ratio, i.e., the ratio of the area of the opening section in the entire light reflecting member, is higher at the area corresponding to the high voltage area, than at the area corresponding to the low voltage area. Thereby, the amount of light to be reflected and therefore illumination brightness can be reduced more greatly at the high voltage area. Thus, the difference in illumination brightness between the high voltage area and the low voltage area can be reduced. Consequently, the illumination brightness can be gently distributed.

The above opening section can include a plurality of opening sections arranged along an axial direction of the tubular light sources, in which the interval between opening sections of the plurality of opening sections adjacently arranged along the axial direction and in the area corresponding to the high voltage area may be set to be smaller than the interval between opening sections of the plurality of opening sections adjacently arranged along the axial direction and in the area corresponding to the low voltage area.
In this construction, regulation of the opening ratio in the light reflecting member is achieved by adjusting the intervals between opening sections. That is, due to the intervals between opening sections being set to be smaller at the area corresponding to the high voltage area than at the area corresponding to the low voltage area, a larger number of opening sections can be provided in the area corresponding to the high voltage area. Thus, the opening ratio in the light reflecting member is set to be relatively high at the area corresponding to the high voltage area. Consequently, the amount of light to be reflected and therefore the illumination brightness can be reduced at the high voltage area, and thereby the illumination brightness can be gently distributed between the high voltage area and the low voltage area.

The opening section may be formed to have a planer dimension that is larger at the area corresponding to the high voltage area than at the area corresponding to the low voltage area.
In this construction, regulation of the opening ratio in the light reflecting member is achieved by adjusting the planar dimension (or size) of the opening section. That is, due to the planar dimension of the opening section being set to be larger at the area corresponding to the high voltage area of the tubular light source than at the area corresponding to the low voltage area, the opening ratio in the light reflecting member can be relatively high at the area corresponding to the high voltage area. Consequently, the amount of light to be reflected and therefore the illumination brightness can be reduced at the high voltage area, and thereby the illumination brightness can be gently distributed between the high voltage area and the low voltage area of the tubular light source.

A chassis can be arranged to contain the tubular light sources and the light reflecting member having the opening section. The chassis can be formed of a metallic plate, and the light reflecting member may be provided to have a light reflectivity higher than the light reflectivity of the chassis.
According to the construction, the lights from the tubular light sources are partially reflected by the light reflecting member, while the rest may reach the metallic chassis through the opening section of the light reflecting member and can be reflected by the chassis. In view of this, the light reflectivity of the light reflecting member is set to be higher than that of the chassis, so that a smaller amount of light can be reflected at the area of the opening section. Thus, adjustment of illumination brightness can be achieved.

On the chassis, at least an inner surface of surfaces thereof may be coated with a color selected from white and similar colors.
If the chassis is thus coated with white or a similar color being prone to reflecting light, the chassis can have a high light reflectivity. Consequently, even at the opening section, the lights from the tubular light sources can be reflected with relatively high efficiency, resulting in effective use of the light.

Alternatively, at least an inner surface of surfaces of the chassis may be coated with a color selected from black, gray and similar colors.
If the chassis is thus coated with black, gray or a similar color being less prone to reflecting light, the chassis can have a lower light reflectivity or more greatly differ in light reflectivity from the light reflecting member. Consequently, the opening section can function as a regulator for illumination brightness, more effectively.

A member with a color selected from transparent, white and similar colors may be arranged between the light reflecting member and the chassis.
According to this construction, the lights from the tubular light sources, having reached the opening section, are reflected by the member arranged between the light reflecting member and the chassis. The member has transparent, white or a similar color being prone to reflecting light, and therefore the light can be reflected with relatively high efficiency, which can result in effective use of the light.

Alternatively, a member with a color selected from black, gray and similar colors may be arranged between the light reflecting member and the chassis.
Also in this construction, the lights from the tubular light sources, having reached the opening section, are reflected by the member arranged between the light reflecting member and the chassis. The member has black, gray or a similar color being less prone to reflecting light, and therefore can have a lower light reflectivity or more greatly differ in light reflectivity from the light reflecting member. Consequently, the opening section can function as a regulator for illumination brightness, more effectively.

A chassis can be arranged to contain the light sources and the light reflecting member having the opening section. The chassis can be formed of a resin molded component, and the light reflecting member may be provided to have a light reflectivity higher than the light reflectivity of the chassis.
The chassis thus formed of a resin molded component can be provided with improved moldability, and regulation of the light reflectivity thereof can be readily achieved by addition of a dye material or the like.

A light source supporting member may be arranged to support the tubular light source on the chassis. A through hole for insertion of the light source supporting member can be provided on the light reflecting member, so that the opening section and the through hole differ in planar dimension from each other.
In this case, as well as the opening section, the opening (or through hole) having another function is also provided on the light reflecting member. In view of this, the opening section and the through hole are provided to differ in planar dimension from each other. Thereby, the opening section and the through hole are distinguishable, and therefore confusion therebetween can be prevented at the time of assembly of the lighting device. Consequently, the manufacturing process may be simplified.

Further, in the case of having a light source supporting member arranged to support the tubular light source on the chassis, a through hole for insertion of the light source supporting member can be provided on the light reflecting member, so that the opening section and the through hole differ in shape from each other.
Also in this case, as well as the opening section, the opening (or through hole) having another function is provided on the light reflecting member. In view of this, the opening section and the through hole are provided to differ in shape from each other. Thereby, the opening section and the through hole are distinguishable, and therefore confusion therebetween can be prevented at the time of assembly of the lighting device. Consequently, the manufacturing process may be simplified.

The above opening section can include a plurality of opening sections arranged in a zigzag pattern.
Alternatively, the above opening section can include a plurality of opening sections arranged in a line.
In these constructions, the opening sections are provided to form a regular arrangement. Thereby, the illumination brightness can be regulated with improved accuracy.

The opening section can be formed on the light reflecting member by punching.
Alternatively, the opening section can be formed on the light reflecting member by a cutting plotter.
The opening section, which is thus to be formed by punching or a cutting plotter, can be arbitrarily designed and be readily formed as designed.

In order to solve the above problem, a display device according to the present invention includes a lighting device described above, and a display panel for providing display by use of light from the lighting device.
In the present display device, the illumination brightness is gently distributed over the lighting device, and thereby display unevenness can be prevented or suppressed in the display device.

A liquid crystal panel can exemplify the above display panel. The display device as a liquid crystal display device has a variety of applications, such as a television display or a personal-computer display. Particularly, it is suitable for a large-screen display.

A television receiver according to the present invention includes a display device described above.
The present television receiver can provide TV pictures with improved visibility, in which display unevenness is prevented or suppressed.

### (Effect of the Invention)

The present invention can provide a lighting device having a simple construction capable of partially regulating the illumination brightness so as to provide a gentle distribution of illumination brightness. Further, a display device of the present invention can provide high-quality display in which display unevenness is prevented or suppressed. A television receiver of the present invention can provide high-quality TV pictures in which display unevenness is prevented or suppressed.

### BRIEF DESCRIPTION OF THE DRAWINGS

[FIG. 1] is an exploded perspective view showing the general construction of a television receiver according to an embodiment 1 of the present invention;
[FIG. 2] is an exploded perspective view showing the general construction of a liquid crystal display device included in the television receiver shown in FIG. 1;
[FIG. 3] is a sectional view of the liquid crystal display device of FIG. 2 along the line A-A;
[FIG. 4] is an explanatory diagram schematically showing the construction and operational effects of a characteristic part of a backlight device included in the liquid crystal display device shown in FIG. 2;
[FIG. 5] is a plan view schematically showing the construction of a light reflecting sheet included the backlight device shown in FIG. 4;
[FIG. 6] is a plan view schematically showing a light reflecting sheet as a modification included in a liquid crystal display device according to an embodiment 2 of the present invention;
[FIG. 7] is a plan view schematically showing a light reflecting sheet as a modification included in a liquid crystal display device according to an embodiment 3 of the present invention;
[FIG. 8] is an explanatory diagram showing a modification of opening sections;
[FIG. 9] is an explanatory diagram showing another modification of the opening sections;
[FIG. 10] is an explanatory diagram showing another modification of the opening sections;
[FIG. 11] is an explanatory diagram showing another modification of the opening sections;
[FIG. 12] is an explanatory diagram showing another modification of the opening sections;
[FIG. 13] is an explanatory diagram showing another modification of the opening sections;
[FIG. 14] is an explanatory diagram showing another modification of the opening sections; and
[FIG. 15] is an explanatory diagram showing another modification of the opening sections.

### Explanation of Symbols

10: Liquid crystal display device (Display device), 11: Liquid crystal panel (Display panel), 12: Backlight device (Lighting device), 14: Backlight chassis (Chassis), 17: Cold cathode tube (Tubular light source), 17A: Narrow-interval area, 17B: Wide-interval area, 20: Lamp clip, 22, 23: Through hole, 30A: High voltage area, 30B: Low voltage area, 40: Light reflecting sheet (Light reflecting member), 50: Opening section, TV: Television receiver.

### BEST MODE FOR CARRYING OUT THE INVENTION

### <Embodiment 1>

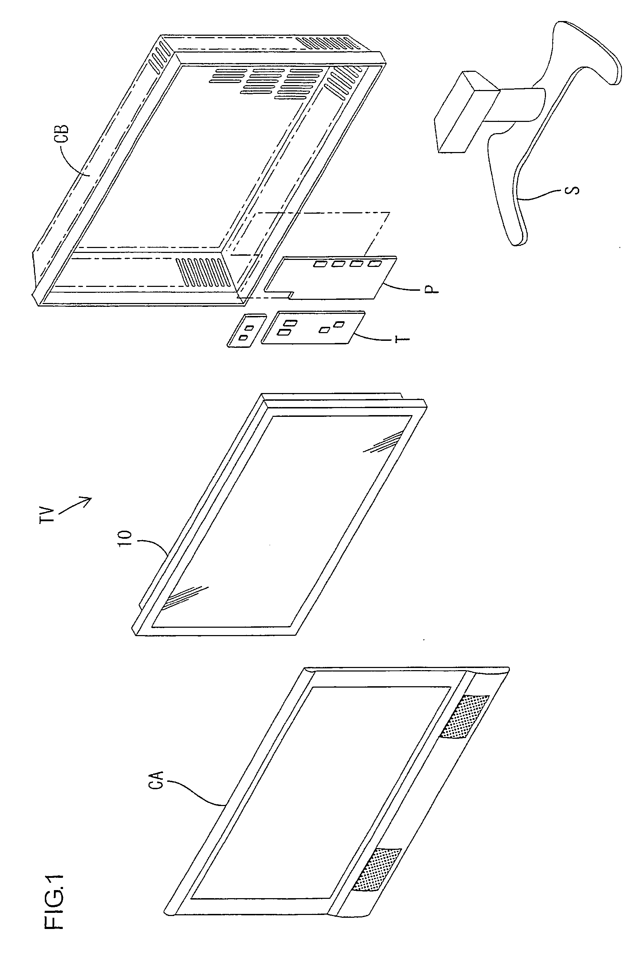

An embodiment 1 according to the present invention will be explained with reference to FIGS. 1 to 5.

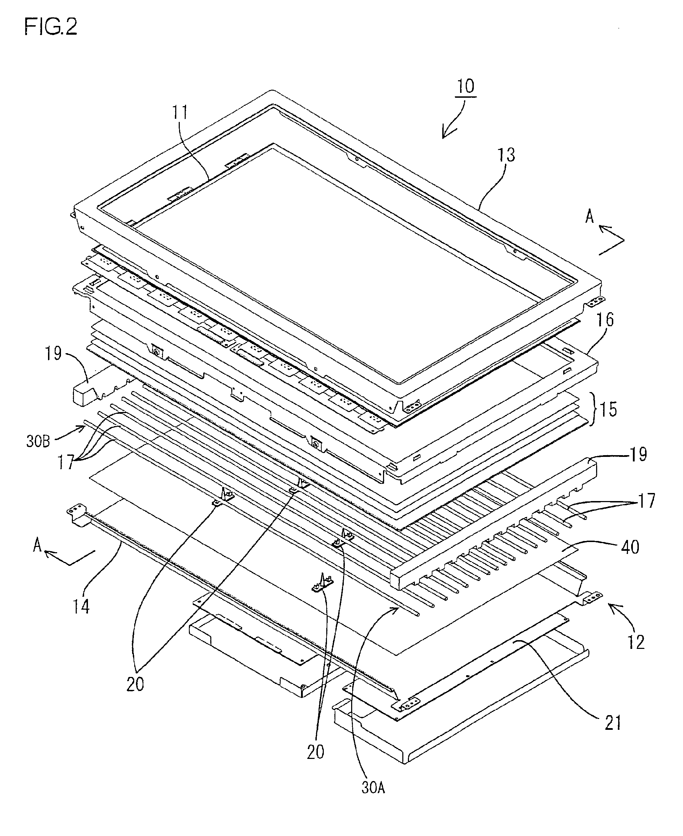

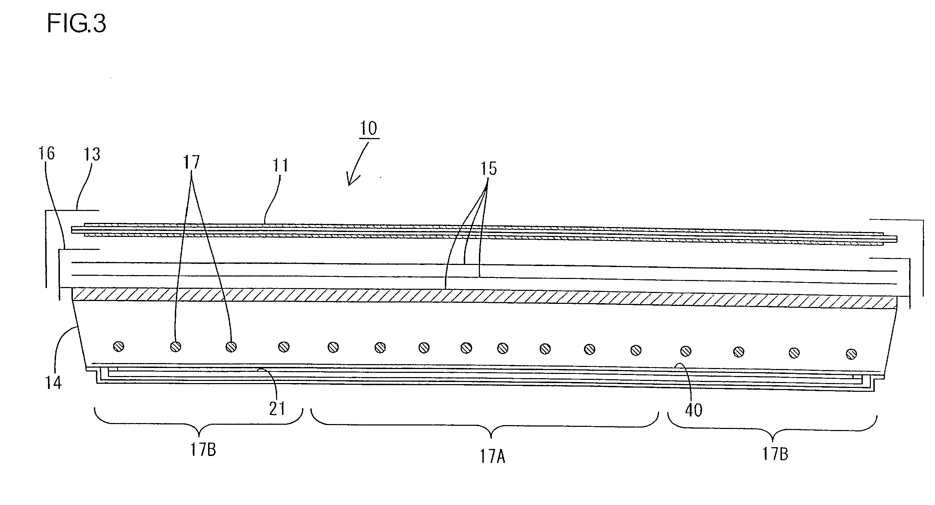

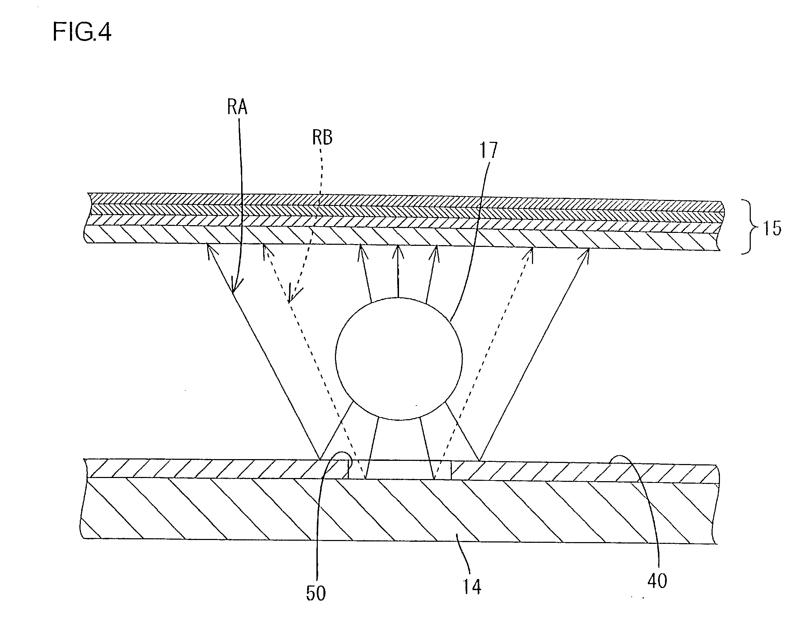

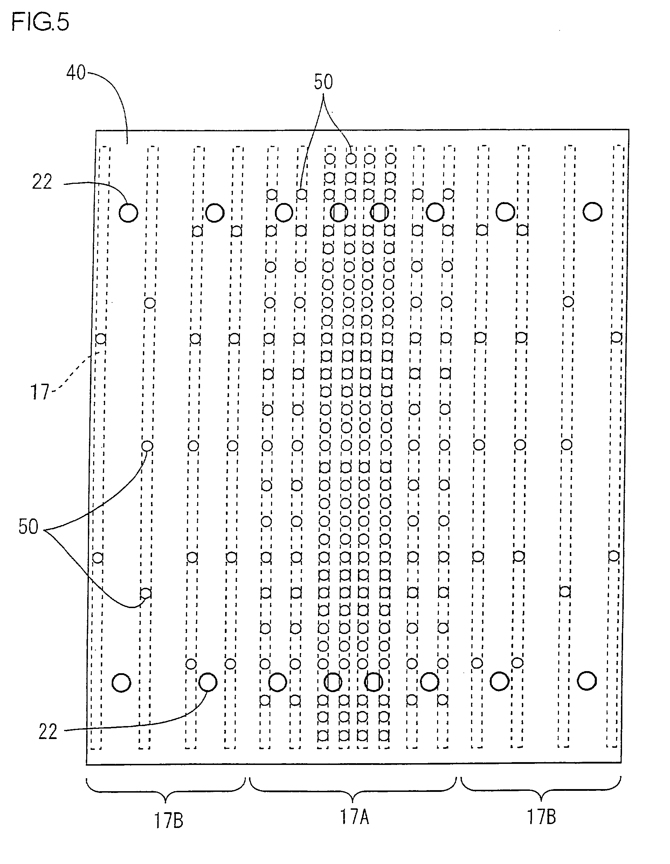

FIG. 1 is an exploded perspective view showing the general construction of a television receiver according to the present embodiment. FIG. 2 is an exploded perspective view showing the general construction of a liquid crystal display device. FIG. 3 is a sectional view showing the general construction of the liquid crystal display device along the line A-A. FIG. 4 is an explanatory diagram schematically showing the construction and operational effects of a characteristic part of a backlight device. FIG. 5 is a plan view schematically showing the construction of a light reflecting sheet.

Referring to FIG. 1, the television receiver TV according to the present embodiment includes a liquid crystal display device 10, and front and back cabinets CA and CB capable of holding the liquid crystal display device 10 therebetween. Further included are a power source P, a tuner T and a stand S. Referring to FIG. 2, the liquid crystal display device (display device) 10 forms a horizontally-elongated rectangular shape as a whole, and includes a liquid crystal panel 11 as a display panel and a backlight device (lighting device) 12 as an external light source, which are integrally held by a bezel 13 and the like.

Next, the liquid crystal panel 11 and the backlight device 12 of the liquid crystal display device 10 will be explained (See FIGS. 2 and 3).
The liquid crystal panel 11 includes a pair of glass substrates, which are attached to each other so as to face each other while a gap of a predetermined size is kept therebetween. Liquid crystal is sealed between the glass substrates. On one of the glass substrates, components such as switching elements (e.g., TFTs) connected to source wiring lines and gate wiring lines running at right angles to each other, and pixel electrodes connected to the switching elements are provided. On the other of the glass substrates, components such as a counter electrode and a color filter having R, G, and B color sections arranged in a predetermined pattern are provided.

The backlight device 12 is a so-called direct-light type backlight device that includes a plurality of linear light sources (e.g., cold cathode tubes (tubular light sources) 17 as high-pressure discharge tubes, in the present embodiment), which are positioned directly below the back surface of the liquid crystal panel 11 (i.e., the panel surface on the opposite side of the display side), and are arranged along the panel surface.

The backlight device 12 includes a backlight chassis (chassis) 14 having a substantially box-like shape with an opening on its upper side, and a plurality of optical members 15 (e.g., a diffuser plate, a diffusing sheet, a lens sheet and an optical sheet, in order from the lower side of the figure) which are arranged to cover in the opening of the backlight chassis 14. Further included is a frame 16 arranged to hold the optical members 15 on the backlight chassis 14. The backlight chassis 14 contains the cold cathode tubes 17, lamp holders 19 arranged to collectively cover the end portions of the cold cathode tubes 17, and lamp clips (or light source supporting members) 20 arranged to mount and hold the cold cathode tubes 17 on the backlight chassis 14. Note that the optical member 15 side of the cold cathode tubes 17 corresponds to the light emitting side of the backlight device 12.

An inverter board 21 for supplying drive voltage to the cold cathode tubes 17 is mounted to the backlight chassis 14, or specifically, mounted on the opposite side of the backlight chassis 14 from the cold cathode tubes 17 (i.e., on the opposite side from the light emitting surface). The inverter board 21 includes an inverter circuit that generates a high-frequency voltage for lighting the cold cathode tubes 17.

Each of the cold cathode tubes 17 forms an elongated tubular shape. A number (e.g., sixteen in FIG. 2) of cold cathode tubes 17 are contained in the backlight chassis 14 so that the longitudinal direction (or axial direction) thereof conforms with the long-side direction of the backlight chassis 14. Referring to FIG. 3, the cold cathode tubes 17 are arranged so that a narrow-interval area 17A where the intervals between the cold cathode tubes 17 are relatively narrow and wide-interval areas 17B where the intervals between the cold cathode tubes 17 are relatively wide are provided. Specifically, the narrow-interval area 17A is positioned in the array direction of the cold cathode tubes 17 so as to be on the center side, and therefore is positioned at the central area of the backlight device 12. The wide-interval areas 17B are positioned in the array direction of the cold cathode tubes 17 so as to be on the end sides, and therefore are positioned at the end areas of the backlight device 12.

The backlight chassis 14 is formed of a metallic plate, and the inner surface thereof is coated with black color. A light reflecting sheet (or a light reflecting member) 40 is provided to form a light reflecting surface, which is arranged on the side of the cold cathode tubes 17 that corresponds to the opposite side of the light emitting side. The backlight chassis 14 thus includes the light reflecting sheet 40, and thereby the lights from the cold cathode tubes 17 can be reflected to the optical members 15 such as the diffuser plate.

The light reflecting sheet 40 can be formed of a resin sheet having light reflectivity, for example. The light reflectivity thereof is set to be higher than that of the backlight chassis 14. The light reflecting sheet 40 is arranged parallel to the array direction of the cold cathode tubes 17. Referring to FIG. 5, the light reflecting sheet 40 is positioned with respect to the array of the cold cathode tubes 17, so that the area thereof corresponding to the center of the short side of the light reflecting sheet 40 faces the narrow-interval area 17A while the areas corresponding to the ends of the short side face the wide-interval areas 17B.

The light reflecting sheet 40 includes through holes 22 provided for insertion of the lamp clips 20, and opening sections 50 provided for regulating the light reflectivity of the light reflecting sheet 40. The through holes 22 and the opening sections 50 both have a circular shape, but differ in planar dimension from each other. According to the construction, as shown in FIG. 4, some of light beams emitted from the cold cathode tubes 17 are reflected by the light reflecting sheet 40, while the rest may reach the metallic backlight chassis 14 through the opening sections 50 of the light reflecting sheet 40 and can be reflected by the backlight chassis 14.

The opening sections 50 can be formed on the light reflecting sheet 40 by punching. In the present embodiment, referring to FIG. 5, the opening sections 50 are the same in dimension, and are arranged in rows parallel to the long-side direction of the light reflecting sheet 40 (or to the axial direction of the cold cathode tubes 17) and overlapping with the cold cathode tubes 17.

Within each of the rows, the intervals between opening sections 50 adjacently arranged on the same row along the axial direction of the cold cathode tube 17 are set to be constant.
However, the intervals between opening sections 50 adjacently arranged along the axial direction of the cold cathode tubes 17 vary among rows. On the rows located in the area of the light reflecting sheet 40 corresponding to the narrow-interval area 17A (i.e., the area of the light reflecting sheet 40 corresponding to the center of its short side), the opening sections 50 are arranged densely or at relatively small intervals. On the rows located in the areas of the light reflecting sheet 40 corresponding to the wide-interval areas 17B (i.e., the areas of the light reflecting sheet 40 corresponding to the ends of its short side), the opening sections 50 are arranged sparsely or at relatively large intervals. Specifically, the intervals are set to increase gradually from the rows facing the narrow-interval area 17A, toward the rows facing the wide-interval areas 17B. Thus, the opening ratio, i.e., the ratio of the areas of opening sections 50 in the entire light reflecting sheet 40, is set to be higher at the area corresponding to the narrow-interval area 17A, than at the areas corresponding to the wide-interval areas 17B.

A plurality (e.g., sixteen in FIG. 5) of rows of opening sections 50 along the axial direction of cold cathode tubes 17 are arranged in the short-side direction of the light reflecting sheet 40 (or in the array direction of the cold cathode tubes 17), so as to be along the parallel-arranged cold cathode tubes 17. The opening sections 50 are also arranged in columns along the short-side direction of the light reflecting sheet 40, so that the columns along the short-side direction are parallel to one another.

The television receiver TV thus constructed according to the present embodiment can provide the following operational effects.
In the liquid crystal display device 10 included in the television receiver TV of the present embodiment, the cold cathode tubes 17 are arranged so that the narrow-interval area 17A where the arrangement interval is relatively narrow and the wide-interval areas 17B where the arrangement interval is relatively wide are provided. Specifically, the narrow-interval area 17A is arranged on the center side of the backlight device 12, while the wide-interval areas. 17B are arranged on the end sides of the backlight device 12. According to the construction, the illumination brightness can be higher at the narrow-interval area 17A than at the wide-interval areas 17B, and consequently the liquid crystal display device 10 can have improved visibility at the center of the screen. Further, the provision of the wide-interval areas 17B can lead to reduction in number of cold cathode tubes 17, resulting in cost reduction.

However, it is extremely difficult to arrange the narrow-interval area 17A capable of providing a relatively high illumination brightness and the wide-interval areas 17B capable of providing a relatively low illumination brightness, in a balanced manner. If the illumination brightness differs excessively between the narrow-interval area 17A and the wide-interval areas 17B, the entire distribution of illumination brightness may be provided as an uneven distribution, resulting in brightness unevenness in the liquid crystal display device 10.

In view of this, according to the present embodiment, the opening sections 50 of the light reflecting sheet 40 are additionally provided as regulating means for illumination brightness. Thereby, the opening ratio, i.e., the ratio between the total area of the light reflecting sheet 40 and the area where the opening sections 50 are formed, is set to be higher at the narrow-interval area 17A compared to at the wide-interval areas 17B.
The opening sections 50, thus provided on the light reflecting sheet 40, cannot reflect the light from the cold cathode tubes 17. Therefore, the amount of light to be reflected by the light reflecting sheet 40 can be reduced, and consequently the illumination brightness can be reduced. At the time, the reduction of illumination brightness can be set to be larger at the narrow-interval area 17A, as a result of setting the opening ratio, i.e. , the ratio between the total area of the light reflecting sheet 40 and the areas of the opening sections 50, to be higher at the area of the light reflecting sheet 40 corresponding to the narrow-interval area 17A than at the areas of the light reflecting sheet 40 corresponding to the wide-interval areas 17B. Thus, the difference in illumination brightness between the narrow-interval area 17A and the wide-interval areas 17B can be reduced. That is, the adjustment of illumination brightness between the narrow-interval area 17A and the wide-interval areas 17B can be achieved by partially regulating the opening ratio in the light reflecting sheet 40. Consequently, the illumination brightness can be gently distributed over the backlight device 12, and thereby display unevenness such as brightness unevenness in the liquid crystal display device 10 can be prevented or suppressed.

Further, in the present embodiment, the opening sections 50 are located directly below the cold cathode tubes 17. The opening sections 50 unable to reflect the light from the cold cathode tubes 17 can have the effect of regulating the illumination brightness, as described above. However, the brightness at the opening sections 50 is relatively low in comparison with that at the ordinary portions surrounding the opening sections 50 (or areas not including the opening sections 50). Thus, a significant difference in brightness may occur therebetween, and consequently the opening sections 50 may be visible to a viewer seeing an image on the liquid crystal display device 10.
In view of this, the opening sections 50 are located to overlap with the cold cathode tubes 17. According to the construction, the cold cathode tubes 17 can be provided between the opening sections 50 and the eyes of the viewer seeing the liquid crystal display device 10, and thereby the opening sections 50 can be prevented from being visible.

In the present embodiment, the opening sections 50 are arranged so that the intervals between opening sections 50 adjacently arranged along the axial direction of the cold cathode tube 17 are set to be smaller at the area corresponding to the narrow-interval area 17A than at the areas corresponding to the wide-interval areas 17B.
According to the construction, a larger number of opening sections 50 can be provided in the area corresponding to the narrow-interval area 17A, compared to those in the areas corresponding to the wide-interval areas 17B. Thus, the opening ratio in the light reflecting sheet 40 is set to be relatively high at the area corresponding to the narrow-interval area 17A. Consequently, the amount of light to be reflected and therefore the illumination brightness can be reduced at the narrow-interval area 17A, and thereby the illumination brightness can be gently distributed between the narrow-interval area 17A and the wide-interval areas 17B.

The present embodiment includes the backlight chassis 14 formed of a metallic plate, and the light reflectivity of the light reflecting sheet 40 is set to be higher than that of the backlight chassis 14.
Referring to FIG. 4, some of light beams emitted from the cold cathode tubes 17 are reflected by the light reflecting sheet 40, while the rest may reach the metallic backlight chassis 14 through the opening sections 50 of the light reflecting sheet 40 and can be reflected by the backlight chassis 14. When the lights from the cold cathode tubes 17 are thus reflected, the reflected light RA from the light reflecting sheet 40 can be provided at a higher rate than the rate for the light RB reflected by the backlight chassis 14 through the opening sections 50, because the light reflectivity of the light reflecting sheet 40 is set to be higher than that of the backlight chassis 14. Thus, reduction in amount of light to be reflected by the light reflecting sheet 40 can be achieved at the areas of the opening sections 50, and thereby adjustment of illumination brightness can be achieved.

In the present embodiment, the inner surface of the backlight chassis 14 is coated with black color.
In order to reliably provide the light reflectivity of the light reflecting sheet 40 higher than that of the backlight chassis 14, the backlight chassis 14 is thus coated with black color as regulating means for the light reflectivity of the backlight chassis 14. Consequently, the backlight chassis 14 can have a lower light reflectivity or more greatly differ in light reflectivity from the light reflecting sheet 40. Consequently, the opening sections 50 can function as regulators for illumination brightness, more effectively.

In the present embodiment, the light reflecting sheet 40 includes the through holes 22 provided for insertion of the lamp clips 20, and the opening sections 50 provided for regulating the light reflectivity. The through holes 22 and the opening sections 50 both have a circular shape, but differ in planar dimension from each other.
When the through holes 22 and the opening sections 50 are thus provided to differ in planar dimension (or in size) from each other, the through holes 22 and the opening sections 50 are distinguishable, and therefore confusion therebetween can be prevented at the time of assembly of the backlight device 12. Thereby, the manufacturing process may be simplified.

Moreover, in the present embodiment, the opening sections 50 are arranged in parallel lines, so as to form a regular arrangement. Thereby, the illumination brightness can be regulated with improved accuracy.

### <Embodiment 2>

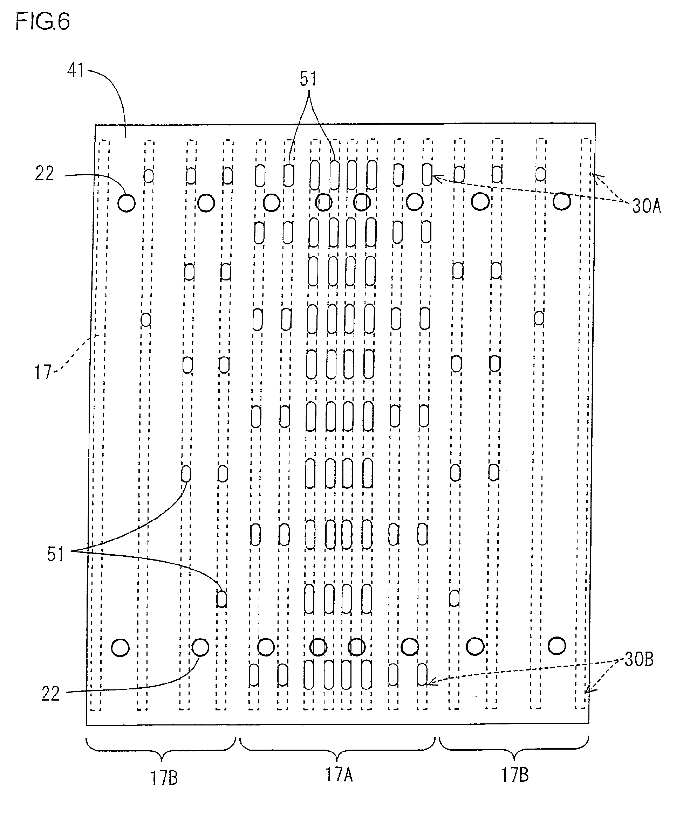

Next, an embodiment 2 of the present invention will be explained with reference to FIG. 6.
In the above embodiment 1, the arrangement of the opening sections 50 is determined solely based on the difference in illumination brightness between the narrow-interval area 17A and the wide-interval areas 17B. In the present embodiment, the arrangement of opening sections 51 is determined further based on the difference in illumination brightness due to voltage difference among areas of cold cathode tubes 17. The other constructions are similar to the above embodiment 1. Therefore, the same parts as the above embodiment are designated by the same symbols, and redundant explanations are omitted. FIG. 6 is a plan view schematically showing the construction of a light reflecting sheet according to the present embodiment.

An inverter board 21 for supplying drive voltage to the cold cathode tubes 17 is mounted on one side of the backlight chassis 14 corresponding to a long-side-directional end thereof, so that the drive voltage from the inverter board 21 is applied to one end portion of each cold cathode tube 17. Therefore, one end side of each cold cathode tube 17, to which the drive voltage is applied, is provided as an area subjected to high voltage (i. e. , a high voltage area 30A), while the other end side is provided as an area subjected to low voltage (i.e., a low voltage area 30B).

Referring to FIG. 6, the light reflecting sheet 41 is arranged parallel to the array direction of the cold cathode tubes 17, so that one long-side-directional end portion (i.e., the upper end portion in FIG. 6) of the light reflecting sheet 41 faces the high voltage areas 30A of the cold cathode tubes 17 while the other long-side-directional end portion (i.e., the lower end portion in FIG. 6) of the light reflecting sheet 41 faces the low voltage areas 30B.

Within each row, the opening sections 51 are the same in planar dimension, and the intervals between opening sections 51 adjacently arranged on the same row along the axial direction of the cold cathode tube 17 are set to vary depending on the position.
Specifically, the intervals between opening sections 51 adjacently arranged along the array direction of the cold cathode tubes 17 are set as follows. In the areas of the light reflecting sheet 41 corresponding to the high voltage areas 30A (i.e., the upper area of the light reflecting sheet 41 in FIG. 6), the opening sections 51 are arranged densely or at relatively small intervals. In the areas of the light reflecting sheet 41 corresponding to the low voltage areas 30B (i.e. , the lower area of the light reflecting sheet 41 in FIG. 6), the opening sections 51 are arranged sparsely or at relatively large intervals. More specifically, the intervals are set to increase gradually from the areas facing the high voltage areas 30A toward the areas facing the low voltage areas 30B. Thus, the opening ratio, i.e., the ratio of the areas of opening sections 51 in the entire light reflecting sheet 41, is set to be higher at the areas corresponding to the high voltage areas 30A, than at the areas corresponding to the low voltage areas 30B.

A plurality (e.g., fourteen in FIG. 6) of rows of opening sections 51 along the axial direction of cold cathode tubes 17 are arranged in the short-side direction of the light reflecting sheet 41 (or in the array direction of the cold cathode tubes 17), so as to be along the parallel-arranged cold cathode tubes 17. The opening sections 51 have circular or oval shapes of varying planar dimension. On the rows located in the area of the light reflecting sheet 41 corresponding to the narrow-interval area 17A (i.e., the area of the light reflecting sheet 41 corresponding to the center of its short side), the opening sections 51 are set to be relatively large in planar dimension (or in size). On the rows located in the areas corresponding to the wide-interval areas 17B (i.e., the areas of the light reflecting sheet 41 corresponding to the ends of its short side), the opening sections 51 are set to be relatively small in planar dimension. Specifically, the planar dimensions are set to decrease gradually from the rows facing the narrow-interval area 17A, toward the rows facing the wide-interval areas 17B. Thus, the opening ratio, i.e., the ratio between the total area of the light reflecting sheet 42 and the areas of the opening sections 52, is set to be higher at the area of the light reflecting sheet 42 corresponding to the narrow-interval area 17A than at the areas of the light reflecting sheet 42 corresponding to the wide-interval areas 17B.

As explained above, according to the present embodiment, the opening sections 51 are provided so that those located in the area corresponding to the narrow-interval area 17A of the cold cathode tubes 17 are larger in planar dimension, than those located in the areas corresponding to wide-interval areas 17B.
When the opening sections 51 located in the area corresponding to the narrow-interval area 17A are thus provided to be larger in planar dimension (or in size) than those located in the areas corresponding to the wide-interval areas 17B, the opening ratio in the light reflecting sheet 41 can be relatively high at the area corresponding to the narrow-interval area 17A. Consequently, the amount of light to be reflected and therefore the illumination brightness can be reduced more greatly at the narrow-interval area 17A, and thereby the illumination brightness can be gently distributed between the narrow-interval area 17A and the wide-interval areas 17B.

Further, in the present embodiment, the opening sections 51 are arranged so that the intervals between opening sections 51 adjacently arranged along the axial direction of the cold cathode tubes 17 are set to be smaller at the areas corresponding to the high voltage areas 30A than at the areas corresponding to the low voltage areas 30B.
According to the construction, a larger number of opening sections 51 can be provided in the areas corresponding to the high voltage areas 30A, compared to those in the areas corresponding to the low voltage areas 30B. Thus, the opening ratio in the light reflecting sheet 41 is set to be relatively high at the areas corresponding to the high voltage areas 30A. Consequently, the amount of light to be reflected and therefore the illumination brightness can be reduced more greatly at the high voltage areas 30A, and thereby the illumination brightness can be gently distributed between the high voltage areas 30A and the low voltage areas 30B.

### <Embodiment 3>

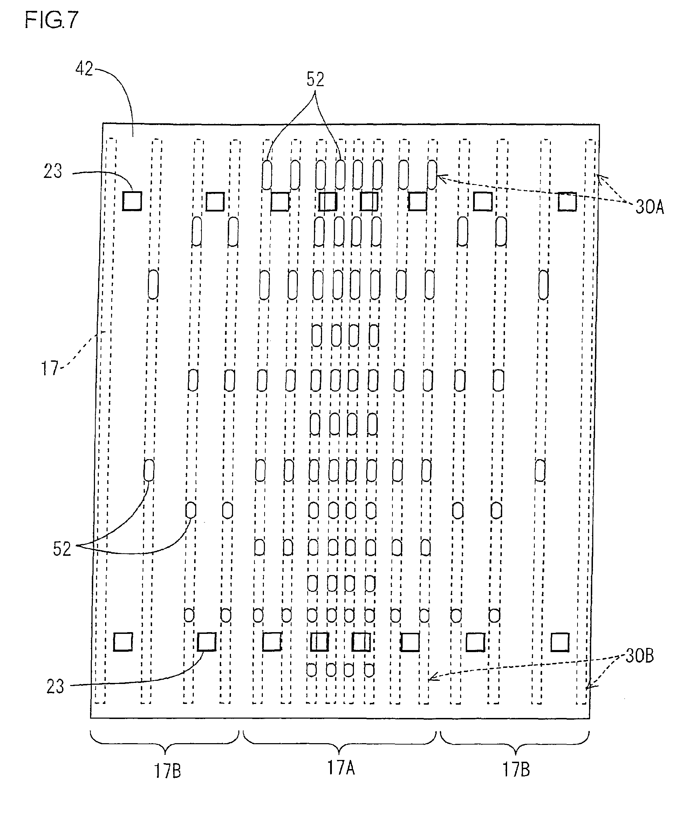

Next, an embodiment 3 of the present invention will be explained with reference to FIG. 7. The difference from the above embodiments 1 and 2 is in the arrangement of opening sections and the shapes of through holes. The other constructions are similar to the above embodiments. Therefore, the same parts as the above embodiments are designated by the same symbols, and redundant explanations are omitted. FIG. 7 is a plan view schematically showing the construction of a light reflecting sheet according to the present embodiment.

Referring to FIG. 7, through holes 23 and opening sections 52 are formed on the light reflecting sheet 42. Each through hole 23 has a square shape. On the other hand, the opening sections 52 have circular or oval shapes of varying planar dimension.

The opening sections 52 are arranged in a row along the long-side direction of the light reflecting sheet 42 (or along the axial direction of the cold cathode tube 17). In the areas of the light reflecting sheet 42 corresponding to the high voltage areas 30A (i.e., the upper area of the light reflecting sheet 42 in FIG. 7), the opening sections 52 are set to be relatively large in planar dimension (or in size). In the areas corresponding to the low voltage areas 30B (i.e. , the lower area of the light reflecting sheet 42 in FIG. 7), the opening sections 52 are set to be relatively small in planar dimension. Specifically, the planar dimensions are set to decrease gradually from the areas facing the high voltage areas 30A toward the areas facing the low voltage areas 30B. Thus, the opening ratio, i.e., the ratio of the areas of opening sections 52 in the entire light reflecting sheet 42, is set to be higher at the areas corresponding to the high voltage areas 30A, than at the areas corresponding to the low voltage areas 30B.

The intervals between opening sections 52 adjacently arranged along the axial direction of the cold cathode tubes 17 are set to vary among rows. On the rows located in the area of the light reflecting sheet 42 corresponding to the narrow-interval area 17A (i.e., the area of the light reflecting sheet 42 corresponding to the center of its short side), the opening sections 52 are arranged densely or at relatively small intervals. On the rows located in the areas of the light reflecting sheet 42 corresponding to the wide-interval areas 17B (i.e., the areas of the light reflecting sheet 42 corresponding to the ends of its short side), the opening sections 52 are arranged sparsely or at relatively large intervals. Specifically, the intervals are set to increase gradually from the rows facing the narrow-interval area 17A, toward the rows facing the wide-interval areas 17B. Thus, the opening ratio, i.e., the ratio of the areas of opening sections 52 in the entire light reflecting sheet 42, is set to be higher at the area corresponding to the narrow-interval area 17A, than at the areas corresponding to the wide-interval areas 17B.

As explained above, according to the present embodiment, the opening sections 52 are provided so that those located in the areas corresponding to the high voltage areas 30A of the cold cathode tubes 17 are larger in planar dimension (or in size), than those located in the areas corresponding to the low voltage areas 30B. Thereby, the opening ratio in the light reflecting sheet 42 can be relatively high at the areas corresponding to the high voltage areas 30A. Consequently, the amount of light to be reflected and therefore the illumination brightness can be reduced more greatly at the high voltage areas 30A, and thereby the illumination brightness can be gently distributed between the high voltage areas 30A and the low voltage areas 30B.

Further, in the present embodiment, the opening sections 52 are arranged so that the intervals between opening sections 52 adjacently arranged along the axial direction of cold cathode tubes 17 are set to be smaller at the area corresponding to the narrow-interval area 17A than at the areas corresponding to the wide-interval areas 17B.
According to the construction, a larger number of opening sections 52 can be provided in the area corresponding to the narrow-interval area 17A, compared to those in the areas corresponding to the wide-interval areas 17B. Thus, the opening ratio in the light reflecting sheet 42 is set to be relatively high at the area corresponding to the narrow-interval area 17A. Consequently, the amount of light to be reflected and therefore the illumination brightness can be reduced at the narrow-interval area 17A, and thereby the illumination brightness can be gently distributed between the narrow-interval area 17A and the wide-interval areas 17B.

In the present embodiment, the light reflecting sheet 42 includes the through holes 23 provided for insertion of the lamp clips 20, and the opening sections 52 provided for regulating the light reflectivity. Each through hole 23 has a square shape, while each opening section 52 has a circular or oval shape.
When the through holes 23 and the opening sections 52 are thus provided to differ in shape from each other, the through holes 23 and the opening sections 52 are readily distinguishable, and therefore confusion therebetween can be prevented at the time of assembly of the backlight device 12. Thereby, the manufacturing process may be simplified.

### <Other Embodiments>

Shown above are embodiments of the present invention. However, the present invention is not limited to the embodiments explained in the above description made with reference to the drawings. The following embodiments may be included in the technical scope of the present invention, for example.

(1) In the above embodiments, the narrow-interval area is positioned in the array direction of the cold cathode tubes so as to be on the center side, while the wide-interval areas are positioned in the array direction of the cold cathode tubes so as to be on the end sides. However, a narrow-interval area and a wide interval area may be located at any position.
Particularly in the case that a lighting device of the present invention is used for a display device, for example, it is preferable that a narrow-interval area is positioned in the array direction of cold cathode tubes so as to be on the inner side of a wide-interval area, because the display device is required to have relatively high brightness at the center of the screen.

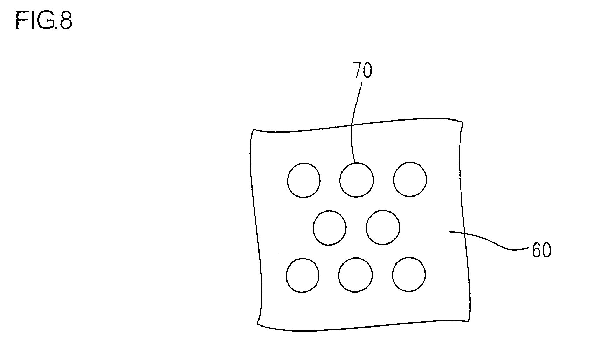

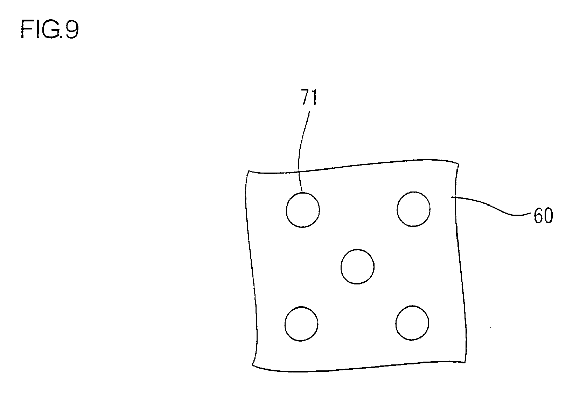

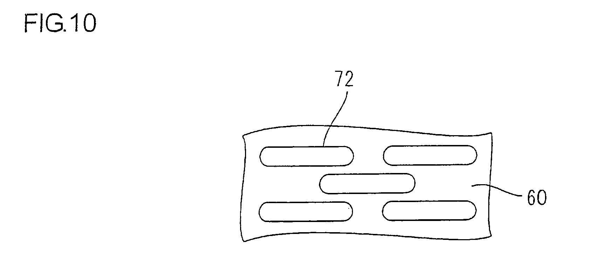

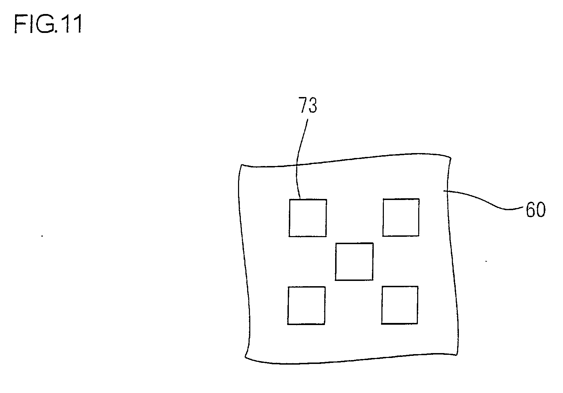

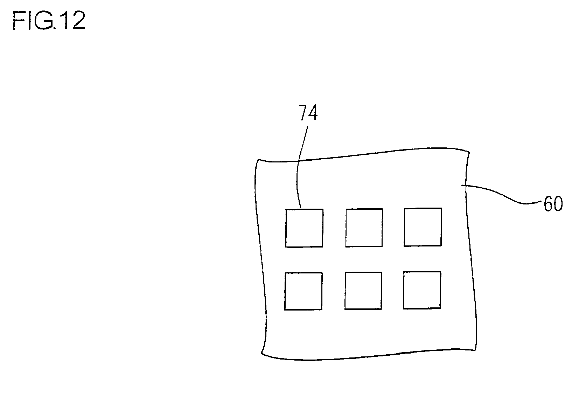

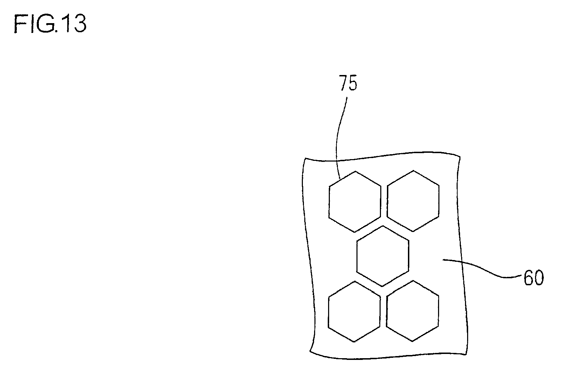

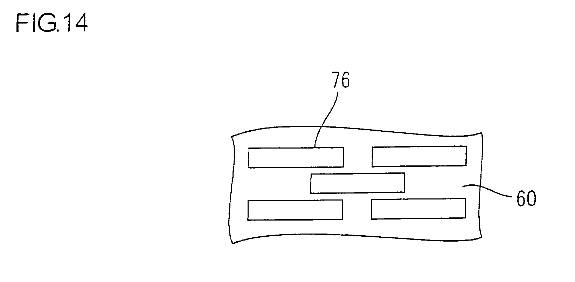

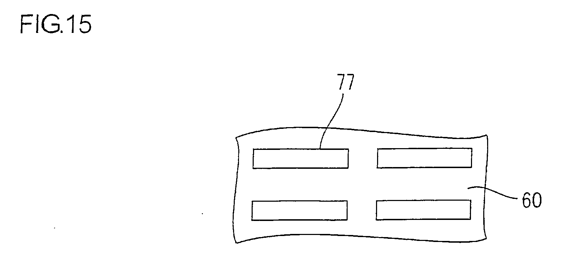

(2) In the above embodiments, the opening sections having circular or oval shapes are arranged in parallel lines (to form an in-line arrangement of circular holes or oval holes). However, the shapes and arrangement of opening sections are not limited to this configuration. For example, on a light reflecting sheet 60, referring to FIG. 8, opening sections 70 having a circular shape may be arranged in a zigzag pattern with 60-degree angles to form a 60-degree zigzag arrangement of circular holes. Alternatively, referring to FIG. 9, opening sections 71 having a circular shape may be arranged in a zigzag pattern with 90-degree angles to form a right-angled zigzag arrangement of circular holes. As shown in FIG. 10, opening sections 72 having an oval shape may be arranged in a zigzag pattern to form a zigzag arrangement of oval holes. As shown in FIG. 11, opening sections 73 having a square shape may be arranged in a zigzag pattern to form a zigzag arrangement of square holes. As shown in FIG. 12, opening sections 74 having a square shape may be arranged in parallel lines to form an in-line arrangement of square holes. As shown in FIG. 13, opening sections 75 having a hexagonal shape may be arranged in a zigzag pattern with 60-degree angles to form a 60-degree zigzag arrangement of hexagonal holes. As shown in FIG. 14, opening sections 76 having a rectangular shape may be arranged in a zigzag pattern to form a zigzag arrangement of rectangular holes. As shown in FIG. 15, opening sections 77 having a rectangular shape may be arranged in parallel lines to form an in-line arrangement of rectangular holes.

(3) In the above embodiments, the opening sections are formed by punching. However, the opening sections may be formed by any forming means, as long as they can be formed as designed. For example, a cutting plotter can be used as forming means.

(4) In the above embodiments, the opening sections are arranged in rows along the axial direction of cold cathode tubes. However, opening sections may be irregularly arranged. The irregular arrangement is particularly suitable as means for achieving a small interval between adjacent opening sections in the area corresponding to the narrow-interval area.

(5) In the above embodiments, the backlight chassis is coated with black color. However, any color such as gray or a similar color can be used as a coating color, as long as it is unlikely to reflect light. Alternatively, a member with black, gray or a similar color may be arranged between the backlight chassis and the light reflecting sheet.

(6) In the above embodiments, the backlight chassis is coated with black color. However, this construction may lead to excessively low light reflectivity at the opening sections. In this case, the light from the tubular light sources may be underutilized, resulting in excessively low rate of utilization thereof. In view of this, the backlight chassis can be coated with white or a similar color, as long as the light reflectivity thereof does not exceed that of the light reflecting sheet. Alternatively, a transparent member or a member with white or a similar color may be arranged between the backlight chassis and the light reflecting sheet.

(7) In the above embodiments, the backlight chassis is formed of a metallic plate. However, it may be formed by resin molding.

(8) In the above embodiments, cold cathode tubes are used as light sources. However, the present invention can include a construction in which another type of light sources such as hot cathode tubes is used, for example.

(9) In the above embodiments, TFTs are used as switching elements of the liquid crystal display device. However, the present invention can be applied to a liquid crystal display device that uses another type of switching elements than TFTs (e.g., thin-film diodes (TFDs)). Further, the present invention can be applied to a liquid crystal display device for monochrome display, as well as a liquid crystal display device capable of color display.

(10) In the above embodiments, a backlight device of a liquid crystal display device is shown as a lighting device. However, the present invention can be applied to other kinds of lighting devices such as a lighting device for interior lighting or a backlight device for illuminating a still image including an advertising image.
Moreover, although a liquid crystal display device is shown as a display device in the above embodiments, the present invention can be applied to other types of display devices than a liquid crystal type, which use a backlight device.

(11) A television receiver having a liquid crystal panel is shown in the above embodiments. However, the present invention can be applied to a television receiver that uses another type of display panel than the liquid crystal panel.

## Claims

1. A lighting device comprising:
a plurality of tubular light sources arranged parallel to one another; and
a light reflecting member arranged on a side of said tubular light sources that corresponds to an opposite side of a light emitting side, wherein:
said tubular light sources are arranged so that a narrow-interval area where an arrangement interval thereof is relatively narrow and a wide-interval area where the arrangement interval is relatively wide are provided;
said light reflecting member includes an opening section located directly below said tubular light sources; and
said opening section is provided so that an opening ratio, which is a ratio between a total area of said light reflecting member and an area where said opening sections are formed, at an area of said light reflecting member corresponding to said narrow-interval area is higher than that at an area of said light reflecting member corresponding to said wide-interval area.

2. A lighting device as in claim 1, wherein said narrow-interval area is positioned in an array direction of said plurality of tubular light sources so as to be on an inner side of said wide-interval area.

3. A lighting device as in claim 1 or 2, wherein said narrow-interval area is positioned at a central area of an array of said tubular light sources, and said wide-interval area is positioned at an end area of the array of said tubular light sources.

4. A lighting device as in any one of claims 1 to 3, wherein:
said opening section includes a plurality of opening sections arranged along an axial direction of said tubular light sources; and
an interval between opening sections of said plurality of opening sections adjacently arranged along the axial direction and in the area corresponding to said narrow-interval area is set to be smaller than an interval between opening sections of said plurality of opening sections adjacently arranged along the axial direction and in the area corresponding to said wide-interval area.

5. A lighting device as in any one of claims 1 to 4, wherein said opening section has a planer dimension that is larger at the area corresponding to said narrow-interval area than at the area corresponding to said wide-interval area.

6. A lighting device as in any one of claims 1 to 5, wherein:
said tubular light source includes a high voltage area to be subjected to relatively high voltage and a low voltage area to be subjected to relatively low voltage; and
said opening section is provided so that an opening ratio as a ratio of an area of said opening section in a whole of said light reflecting member is higher at an area corresponding to said high voltage area, than at an area corresponding to said low voltage area.

7. A lighting device as in claim 6, wherein:
said opening section includes a plurality of opening sections arranged along an axial direction of said tubular light sources; and
an interval between opening sections of said plurality of opening sections adjacently arranged along the axial direction and in the area corresponding to said high voltage area is set to be smaller than an interval between opening sections of said plurality of opening sections adjacently arranged along the axial direction and in the area corresponding to said low voltage area.

8. A lighting device as in claim 6 or 7, wherein said opening section has a planer dimension that is larger at the area corresponding to said high voltage area than at the area corresponding to said low voltage area.

9. A lighting device as in any one of claims 1 to 8, further comprising:
a chassis arranged to contain said tubular light sources and said light reflecting member having said opening section, wherein:
said chassis is formed of a metallic plate; and
said light reflecting member has a light reflectivity higher than a light reflectivity of said chassis.

10. A lighting device as in claim 9, wherein at least an inner surface of surfaces of said chassis is coated with a color selected from white and similar colors.

11. A lighting device as in claim 9, wherein at least an inner surface of surfaces of said chassis is coated with a color selected from black, gray and similar colors.

12. A lighting device as in any one of claims 9 to 11, wherein a member with a color selected from transparent, white and similar colors is arranged between said light reflecting member and said chassis.

13. A lighting device as in any one of claims 9 to 11, wherein a member with a color selected from black, gray and similar colors is arranged between said light reflecting member and said chassis.

14. A lighting device as in any one of claims 1 to 8, further comprising:
a chassis arranged to contain said light sources and said light reflecting member having said opening section, wherein:
said chassis is formed of a resin molded component; and
said light reflecting member has a light reflectivity higher than a light reflectivity of said chassis.

15. A lighting device as in any one of claims 9 to 14, further comprising:
a light source supporting member arranged to support said tubular light source on said chassis, wherein:
a through hole for insertion of said light source supporting member is provided on said light reflecting member; and
said opening section and said through hole differ in planar dimension from each other.

16. A lighting device as in any one of claims 9 to 14, further comprising:
a light source supporting member arranged to support said tubular light source on said chassis, wherein:
a through hole for insertion of said light source supporting member is provided on said light reflecting member; and
said opening section and said through hole differ in shape from each other.

17. A lighting device as in any one of claims 1 to 16, wherein said opening section includes a plurality of opening sections arranged in a zigzag pattern.

18. A lighting device as in any one of claims 1 to 16, wherein said opening section includes a plurality of opening sections arranged in a line.

19. A lighting device as in any one of claims 1 to 18, wherein said opening section is formed on said light reflecting member by punching.

20. A lighting device as in any one of claims 1 to 18, wherein said opening section is formed on said light reflecting member by a cutting plotter.

21. A display device comprising:
a lighting device as in any one of claims 1 to 20; and
a display panel arranged on an illumination light emitting side of said lighting device.

22. A display device as in claim 21, wherein said display panel is a liquid crystal panel that includes a pair of substrates and liquid crystal sealed therebetween.

23. A television receiver comprising a display device as in claim 21 or 22.
